# EUROPÄISCHE PATENTSCHRIFT

(11) **EP 3 284 785 B1**
(45) Veröffentlichungstag und Bekanntmachung des Hinweises auf die Patenterteilung: **03.11.2021**
(21) Anmeldenummer: 17185884.8
(22) Anmeldetag: 11.08.2017
(51) Int. Cl.: C08L 53/02, C08L 23/12, C08L 61/06, B60J 10/16, B60J 10/70

(54) **THERMOPLASTISCHE ELASTOMERZUSAMMENSETZUNG ZUR HAFTUNG AUF VERNETZTEN DIEN-KAUTSCHUKEN**
THERMOPLASTIC ELASTOMER COMPOSITION FOR ADHESION ON CROSSLINKED DIENE RUBBERS
COMPOSITION D'ÉLASTOMÈRE THERMOPLASTIQUE PERMETTANT L'ADHÉRENCE AUX CAOUTCHOUCS DE DIÈNES RÉTICULÉS

(30) Priorität: 17.08.2016 DE 102016115271; 02.06.2017 DE 102017112243
(43) Veröffentlichungstag der Anmeldung: 21.02.2018
(73) Patentinhaber: Kraiburg TPE GmbH & Co. KG, 84478 Waldkraiburg (DE)
(72) Erfinder: Vielsack, Dr. Frieder, 84478 Waldkraiburg (DE)
(74) Vertreter: Eder Schieschke & Partner mbB

(56) Entgegenhaltungen:
- DE-A1-102006 002 759
- US-A1- 2010 305 272

## Beschreibung

Die vorliegende Erfindung betrifft eine thermoplastische Elastomerzusammensetzung (TPE-Zusammensetzung) mit einer verbesserten Haftung auf Gummi auf Basis von vernetzten Dien-Kautschukmischungen, deren Kautschuke vorzugsweise schwefelvernetzbar sind, vorzugsweise ausgewählt aus der Gruppe Natur-Kautschuk (NR), Isopren-Kautschuk (IR), Butadien-Kautschuk (BR), Styrol-Butadien-Kautschuk (SBR), Chloropren-Kautschuk (CR), Acrylnitril-Butadien-Kautschuk (NBR), ButylKautschuk (IIR) oder Ethylen-Propylen-Dien-Kautschuk (EPDM). Im Folgenden wird unter dem Begriff Dien-Kautschuk die Gruppe der genannten schwefelvernetzbaren Kautschuke NR, IR, BR, SBR, CR, NBR, IIR oder EPDM verstanden. Ferner werden unter dem Begriff Gummi im Weiteren die beschriebenen vernetzten Dienkautschuke verstanden. Weiterhin betrifft die vorliegende Erfindung auch die Verwendung einer thermoplastischen Elastomerzusammensetzung zur Herstellung eines Verbundmaterials mit einem Gummi sowie einen Artikel, der eine thermoplastische Elastomerzusammensetzung und einen Gummi umfasst. Die vorliegende Erfindung betrifft zudem ein Verfahren zur Herstellung einer thermoplastischen Elastomerzusammensetzung.

Im Stand der Technik sind einige thermoplastische Elastomer-Varianten (TPE) zu finden, die für die Haftung auf vernetztem Dienkautschuk, im Speziellen EPDM, Verwendung finden. Es handelt sich zum einen um TPE auf Basis von EPDM/Polypropylen (PP) und zum anderen um TPE auf Basis von Styrol-BlockCopolymeren (SBC). Beide Arten sind bekannt und werden in unterschiedlichen Anwendungen eingesetzt. Ein bevorzugter Einsatz der Varianten ist die Haftung auf vernetztem EPDM. Vernetztes EPDM wird beispielsweise als Dichtung an Fahrzeugseitentüren umlaufend im Bereich der Fensterscheibe eingesetzt. Aus fertigungstechnischen Gründen wird die dafür verwendete Dichtung nicht bereits als ringförmiges Band, sondern als unterbrochenes Band gefertigt. Damit die Dichtung jedoch umlaufend entlang der Fensterscheibe einer Fahrzeugtüre abdichtet, müssen die beiden Enden des Bandes miteinander dicht verbunden werden. Dies erfolgt bisher häufig mit einem der genannten TPEs. Es ist jedoch für beide genannten TPE-Varianten bekannt, dass sie sowohl Vor- als auch Nachteile haben.

Ferner ist es ebenfalls möglich, Gummi auf Gummi zu vulkanisieren. Beispielsweise wird hierzu die aus vernetztem EPDM bestehende Dichtung anstelle von TPE mit EPDM an beiden Enden dicht verbunden. Mit anderen Worten, EPDM wird auf die Dichtung vulkanisiert. Diese Methode birgt den Nachteil langer Zykluszeiten im Vergleich zu der Methode mit den TPE-Varianten.

So zeigen die bisher eingesetzten TPE ein Ausbluten von Weichmachern bereits nach kurzer Zeit der Bewitterung bzw. der Bestrahlung mit UV-Licht. Dieses Ausbluten oder auch Ausölen genannt führt, besonders bei hellen Fahrzeugen, zu unschönen schwarzen Schlieren auf dem Lack durch mit Regenwasser heruntergewaschene, ausgetretene Bestandteile.

Die TPE-Variante EPDM/PP hat weiterhin den Nachteil, erst bei sehr hohen Temperaturen von größer als 270°C gute Haftungsergebnisse auf vernetztem EPDM zu erzielen. Der Prozess ist daher sehr energieintensiv, und gleichzeitig erhöht sich durch die hohe Verarbeitungstemperatur die benötigte Kühldauer und damit die Zykluszeit.

Die TPE-Variante auf Basis von SBC hat bei guter Haftung den Nachteil, klebrig gegenüber Glas zu sein bzw. eine hohe Friktion gegenüber Glas zu zeigen. In der Anwendung bei Fahrzeugfensterscheibendichtungen kann dies zu einem Nachteil werden, da ein direkter Kontakt zur Glasscheibe besteht und die Scheibe sich auch über das TPE bewegt. Die Friktion erhöht sich durch die Bewitterung und UV-Belastung, die das Fahrzeug durch natürliche, äußere Einflüsse erfährt; das SBC-Material wird langsam klebrig. Um eine ausreichende Haftung auf EPDM zu erreichen, werden niedermolekulare (klebrige) SBC verwendet, die den Nachteil mit sich bringen, dass sie im Laufe der Zeit an die Oberfläche migrieren. Es zeigt sich, dass sich im Laufe der Zeit die Friktion gegenüber Glas weiter erhöht.

Die DE 10 2006 002 759 A1 betrifft thermoplastische Elastomere mit guten elastischen Eigenschaften, die jedoch mit 20 bis 60 Gew.-% eines Ethylen-Propylen-Terpolymers einen höheren Anteil an doppelbindungshaltigem Polymer aufweisen.

Es war deshalb die Aufgabe der vorliegenden Erfindung, eine thermoplastische Elastomerzusammensetzung bereitzustellen, die die genannten Nachteile nicht bzw. nur sehr wenig aufweist, insbesondere eine Zusammensetzung bereitzustellen, die eine permanente Haftung auf Gummi-Oberflächen, im Speziellen vernetzten EPDM-Oberflächen aufweist, für den Außeneinsatz geeignet ist, eine niedrige Friktion hat sowie kein Ausbluten von Weichmachern zeigt.

Zur Lösung der genannten Aufgabe stellt die vorliegende Erfindung eine thermoplastische Elastomerzusammensetzung bereit, die ein Styrol-Block-Copolymer (SBC) mit einem durchschnittlichen zahlenmittleren Molekulargewicht *M*ₙ von mehr als 70.000 g/mol, ein doppelbindungshaltiges Polymer mit einem Molanteil an Doppelbindungen im Bereich von 5 bis 95 Mol-%, bezogen auf die Monomereinheiten des Polymers, und ein nicht-elastomeres Polyolefin umfasst, worin der Gewichtsanteil des SBC im Bereich von 15 bis 40 Gew.-% liegt, bezogen auf das Gesamtgewicht der Zusammensetzung, und worin das Gewichtsverhältnis von SBC zu doppelbindungshaltigem Polymer im Bereich von 10:1 bis 4:1 liegt.

Das erfindungsgemäß verwendete SBC kann ein doppelbindungshaltiges oder doppelbindungsfreies SBC sein, wobei jedoch ein doppelbindungsfreies SBC von Vorteil ist. Diese doppelbindungsfreien SBC sind dem Fachmann auch als hydrierte SBC geläufig. Es ist es aus Gründen der besseren UV-Beständigkeit bevorzugt, dass das SBC keine Doppelbindungen aufweist. In anderen Worten ist das SBC vorzugsweise ein hydriertes SBC. Das SBC ist vorzugsweise ein lineares Triblock-Copolymer. Dabei ist es bevorzugt, dass das SBC neben mindestens einem Polystyrol-Block mindestens einen Polyolefin-Block aufweist, vorzugsweise einen Ethylen/Propylen-, Ethylen/Butylen- oder Isobutylen-Block. Ganz besonders bevorzugt ist das SBC ein SEBS (Polystyrol-block-poly(ethylen-co-butylen)-block-polystyrol), ein SEEPS (Polystyrol-block-poly(ethylen-co-(ethylen-propylen))-block-polystyrol), ein SEPS (Polystyrol-block-poly(ethylen-co-propylen)-block-polystyrol) oder ein SiBS (Polystyrol-block-polyisobutylen-block-polystyrol), besonders bevorzugt ein SEBS. Bevorzugte Beispiele von erfindungsgemäß verwendbaren SBC sind weiter unten beschrieben.

Das durchschnittliche Molekulargewicht des SBC liegt vorzugsweise im Bereich von mehr als 70.000 g/mol bis 1.000.000 g/mol, stärker bevorzugt im Bereich von 100.000 g/mol bis 500.000 g /mol und am stärksten bevorzugt im Bereich von 200.000 g/mol bis 400.000 g/mol. Erfindungsgemäß handelt es sich in der vorliegenden Anmeldung immer um das zahlenmittlere Molekulargewicht *Mₙ.* Der Vorteil des hohen Molekulargewichts des SBC liegt darin, dass TPE auf Basis solcher Polymere weniger zum Ausölen der Weichmacher neigen. Somit ist die Oberfläche trockener und die Friktion kleiner.

Um dennoch eine hervorragende Haftung auf vernetzten Dien-Kautschukmischungen zu ermöglichen, befindet sich in der erfindungsgemäßen thermoplastischen Elastomerzusammensetzung ferner ein doppelbindungshaltiges Polymer. Die Erfinder der vorliegenden Erfindung gehen davon aus, dass die Doppelbindungen dieses doppelbindungshaltigen Polymers mit überschüssigen, nicht abreagierten Schwefelatomen von Schwefel oder schwefelhaltigen Verbindungen aus dem Vernetzungssystem der vernetzten Dien-Kautschukmischung reagieren können und somit die Haftung verbessern.

Das doppelbindungshaltige Polymer ist vorzugsweise ein unhydriertes Styrol-Block-Copolymer oder ein schwefelvernetzbarer, unvernetzter Dien-Kautschuk, vorzugsweise SIS, unvernetzter EPDM oder Isopren-Kautschuk (IR).

Ist das doppelbindungshaltige Polymer ein unhydriertes SBC, so ist es bevorzugt, dass es einen Molanteil an Doppelbindungen im Bereich von 50 bis 90 Mol-%, stärker bevorzugt 60 bis 85 Mol-% aufweist, bezogen auf die Monomereinheiten des SBC.

Dabei ist es bevorzugt, dass das SBC neben mindestens einem Polystyrol-Block mindestens einen Polyolefin-Block aufweist. Besonders bevorzugt ist das unhydrierte SBC ein lineares Triblock-Copolymer, ausgewählt aus der Gruppe SBS (Polystyrol-block-polybutadien-block-polystyrol), SIS (Polystyrol-blockpolyisopren-block-polystyrol) und SIBS (Polystyrol-block-poly(isopren-co-butadien)-block-polystyrol). Ganz besonders bevorzugt ist das doppelbindungshaltige Polymer ein SIS.

Es ist in der erfindungsgemäßen Zusammensetzung bevorzugt, dass das SBC und das doppelbindungshaltige Polymer unterschiedliche Polymere sind.

Ist das doppelbindungshaltige Polymer ein schwefelvernetzbarer, unvernetzter Dien-Kautschuk, so ist es bevorzugt, dass dieser einen Molanteil an Doppelbindungen im Bereich von 5 bis 40 Mol-%, stärker bevorzugt 7 bis 20 Mol-% aufweist, bezogen auf die Molanzahl an Monomereinheiten des Polymers. Besonders bevorzugt ist das doppelbindungshaltige Polymer ein unvernetzter EPDM- oder Isopren-Kautschuk (IR).

Das doppelbindungshaltige Polymer liegt bevorzugt unvernetzt im erfindungsgemäßen TPE vor.

Weiterhin ist es bevorzugt, dass zur Erzeugung einer hervorragenden Haftung auf vernetzten Dien-Kautschukmischungen, diese als Vernetzungssystem Schwefel oder schwefelhaltige Verbindungen aufweisen.

Ferner ist es bevorzugt, dass zur Erzeugung einer hervorragenden Haftung überschüssiger Schwefel oder schwefelhaltige Verbindungen, der vernetzten Dien-Kautschukmischungen, mit dem erfindungsgemäßen, doppelbindungshaltigen Polymer zur Reaktion gebracht werden.

Das nicht-elastomere Polyolefin in der erfindungsgemäßen TPE-Zusammensetzung ist vorzugsweise ein Thermoplast. Beispiele hierfür sind weiter unten beschrieben.

Weiterhin kann die erfindungsgemäße TPE-Zusammensetzung ein Phenolharz aufweisen. Die Anwesenheit eines Phenolharzes kann die Haftungseigenschaften der erfindungsgemäßen TPE-Zusammensetzung zu Gummi weiter erhöhen. Es wird davon ausgegangen, dass der Grund hierfür in der Reaktion des Phenolharzes mit verbliebenen, nicht abreagierten Doppelbindungen des vernetzten Dien-Kautschuks des Gummis einerseits und mit Doppelbindungen im doppelbindungshaltigen Polymer der erfindungsgemäßen TPE-Zusammensetzung andererseits liegt. Mit anderen Worten, es wird davon ausgegangen, dass zwischen den Grenzflächen der erfindungsgemäßen TPE-Zusammensetzung und des Gummis Vernetzung stattfindet. Dies ist dann bevorzugt möglich, wenn nach der Herstellung des Gummis durch Vernetzung der Dien-Kautschukmischung noch unreagierte Doppelbindungen verbleiben, die mittels vorzugsweise Phenolharzen zur Reaktion gebracht werden können. Bevorzugt weist das Phenolharz hierzu mindestens zwei Einheiten auf, die mit Doppelbindungen reagieren können. Auf diese Weise kann das Phenolharz mit einer der Einheiten mit einer Doppelbindung im vernetzten Dien-Kautschuk und mit einer anderen der Einheiten mit einer Doppelbindung im doppelbindungshaltigen Polymer des TPE reagieren und eine Verknüpfung eingehen. Damit kann das Phenolharz als Brücke zwischen der erfindungsgemäßen Zusammensetzung und dem Gummiartikel dienen. Erfindungsgemäß verwendbare Phenolharze sind ebenso weiter unten beschrieben.

Die erfindungsgemäße Zusammensetzung kann weiterhin einen Weichmacher enthalten, der dazu dient, die Zusammensetzung weich zu halten, um die Funktion als Dichtung zu verbessern. Trotz der Anwesenheit eines Weichmachers neigt die erfindungsgemäße Zusammensetzung nicht zum Ausölen des Weichmachers, da das erfindungsgemäß eingesetzte SBC mit dem durchschnittlichen zahlenmittleren Molekulargewicht *M*ₙ von mehr als 70.000 g/mol geeignet ist, dies zu verhindern. Erfindungsgemäß verwendbare Weichmacher sind ebenso weiter unten aufgeführt.

Weiterhin kann die erfindungsgemäße Zusammensetzung auch einen Vernetzungshilfsstoff aufweisen, der dazu dient, die Reaktion zwischen den Doppelbindungen des doppelbindungshaltigen Polymers und dem überschüssigen Schwefel oder schwefelhaltigen Verbindung der vernetzten Dien-Kautschukmischung zu beschleunigen bzw. zu katalysieren.

Die erfindungsgemäße Zusammensetzung kann auch eine oder mehrere der folgenden Additive enthalten: Molekularsiebe, Stabilisatoren, Hilfsstoffe sowie Farbstoffe. Die erfindungsgemäße Zusammensetzung kann auch Füllstoffe enthalten. Beispiele für Additive und Füllstoffe sind ebenso weiter unter genannt.

Die erfindungsgemäße Zusammensetzung weißt verbesserte Haftung gegenüber Gummi auf. Dabei besteht der Gummi vorzugsweise aus vernetzten Dien-Kautschukmischungen, die mittels Schwefel oder schwefelhaltigen Verbindungen vernetzbar sind. Genannt als schwefelvernetzbare Dien-Kautschukmischungen sind solche auf Basis von NR-, IR-, BR-, SBR-, CR-, NBR-, IIR- oder EPDM-Kautschuk. Hierbei besteht die Kautschukmischung bevorzugt aus NBR- und EPDM-Kautschuk und ganz besonders bevorzugt aus EPDM-Kautschuk.

Dem Fachmann ist bekannt, dass neben dem Kautschuk eine Kautschukmischung weitere Inhaltsstoffe enthält wie beispielsweise Füllstoffe, Weichmacher, Verarbeitungshilfsmittel, Stabilisatoren wie Alterungsschutzmittel, UV-Schutzmittel, OzonSchutzmittel und das Vernetzungssystem (auch Vulkanisationssystem genannt) sowie andere Additive wie beispielsweise Haftvermittler, Treibmittel, Flammschutzmittel. Siehe hierzu auch "G. Abts, Einführung in die Kautschuktechnologie, Carl Hanser Verlag München (2007), S. 53 ff".

Die erfindungsgemäße TPE-Zusammensetzung haftet dabei auf vernetzten Dien-Kautschukmischungen, deren Vulkanisationssystem auf Schwefel und/oder schwefelhaltigen Vernetzungschemikalien basiert. Dem Fachmann sind Vernetzungschemikalien auf Basis von Schwefel und schwefelhaltigen Systemen, wie auch deren Mechanismen hinlänglich bekannt. Hierzu sei auf " F. Röthemeyer, F. Sommer, Kautschuktechnologie, Carl Hanser Verlag München (2006), 2. Auflage, Kap. 3.2.1. bis einschließlich 3.2.2.9." verwiesen. Es sei ferner darauf hingewiesen, dass die erfindungsgemäße TPE-Zusammensetzung auch auf vernetzten Dien-Kautschukmischungen mit peroxidischen Vulkanisationssystemen haftet. Es hat sich jedoch gezeigt, dass diese Haftung geringer ist, als diejenige, bei der die Kautschukmischung mittels Schwefel und/oder schwefelhaltigen Vernetzungssystemen vernetzt wurde. Daher ist es bevorzugt, dass der Gummi, auf dem die erfindungsgemäße TPE-Zusammensetzung haften soll, mittels Schwefel und/oder schwefelhaltigen Vernetzungssystemen vernetzt wurde. Besonders bevorzugt liegen nach der Vulkanisation des Gummis noch freie, unreagierte Schwefel und/oder Schwefelverbindungen im Gummi vor.

Die vorliegende Erfindung betrifft auch die Verwendung einer thermoplastischen Elastomerzusammensetzung zur Herstellung eines Verbundmaterials/Artikels mit Gummi, wobei der Gummi auf Basis einer schwefelvernetzbaren, vernetzten Dien-Kautschukmischung aus der Gruppe von NR, IR, BR, SBR, CR, NBR, IIR oder EPDM besteht, beziehungsweise zur Haftung einer thermoplastischen Elastomerzusammensetzung auf einem Gummi, wobei die thermoplastische Elastomerzusammensetzung ein Styrol-Block-Copolymer (SBC) mit einem durchschnittlichen zahlenmittleren Molekulargewicht *M*ₙ von mehr als 70.000 g/mol, ein doppelbindungshaltiges Polymer mit einem Molanteil an Doppelbindungen im Bereich von 5 bis 95 Mol-%, bezogen auf die Monomereinheiten des Polymers, und ein nicht-elastomeres Polyolefin umfasst. Bevorzugt als Gummi ist NBR und EPDM, ganz besonders bevorzugt EPDM. In anderen Worten betrifft die vorliegende Erfindung auch ein Verfahren zur Herstellung eines Artikels, z.B. in Form eines Verbundmaterials, aus einer thermoplastischen Elastomerzusammensetzung und einem Gummi, wobei die thermoplastische Elastomerzusammensetzung mit einem Gummi verbunden wird, wobei die thermoplastische Elastomerzusammensetzung ein Styrol-Block-Copolymer (SBC) mit einem durchschnittlichen zahlenmittleren Molekulargewicht *M*ₙ von mehr als 70.000 g/mol, ein doppelbindungshaltiges Polymer mit einem Molanteil an Doppelbindungen im Bereich von 5 bis 95 Mol-%, bezogen auf die Monomereinheiten des Polymers, und ein nicht-elastomeres Polyolefin umfasst. Dabei wird bei der erfindungsgemäßen Verwendung bzw. dem erfindungsgemäßen Verfahren als Verarbeitungsmethode zur Herstellung der Artikel Spritzguss, Mehrkomponenten-Spritzguss, Spritzguss-Einlegeverfahren, Extrusion oder Formpressverfahren verwendet, wobei Spritzguss, Spritzguss-Einlegeverfahren und Extrusion bevorzugt und Spritzguss-Einlegeverfahren ganz besonders bevorzugt ist. Bei der erfindungsgemäßen Verwendung bzw. Verfahren ist es bevorzugt, dass zur Herstellung des Verbundmaterials/Artikels der Gummi an der zu verbindenden Stelle eine relativ frische Schnittstelle aufweist, d.h. es ist bevorzugt, dass die Schnittstelle nicht älter als 2 h, vorzugsweise nicht älter als 1 h ist. Auf diese Weise wird gewährleistet, dass sowohl Schwefel und/oder schwefelhaltige Verbindungen als auch die nicht abreagierten (unvernetzten), freien Doppelbindungen der vulkanisierten Dien-Kautschukmischung an der Oberfläche zur Haftung mit der erfindungsgemäßen Zusammensetzung zur Verfügung stehen.

Somit betrifft die vorliegende Erfindung auch einen Artikel, z.B. in der Form eines Verbundmaterials, aus einer thermoplastischen Elastomerzusammensetzung und einem Gummi, wobei die thermoplastische Elastomerzusammensetzung ein Styrol-Block-Copolymer (SBC) mit einem durchschnittlichen zahlenmittleren Molekulargewicht *M*ₙ von mehr als 70.000 g/mol, ein doppelbindungshaltiges Polymer mit einem Molanteil an Doppelbindungen im Bereich von 5 bis 95 Mol-%, bezogen auf die Monomereinheiten des Polymers, und ein nicht-elastomeres Polyolefin umfasst.

Unter einem EPDM-Kautschuk wird hierin ein Ethylen-Propylen-Dien-Kautschuk verstanden, der ein terpolymerer, synthetischer Kautschuk ist. EPDM gehört zu den statistischen Copolymeren mit gesättigtem Polymerhauptkettengerüst und Doppelbindungen in der Seitenkette, die dazu dienen können, den EPDM-Kautschuk in der Kautschukmischung mit Hilfe des Vulkanisationssystems zu vernetzen. Die Herstellung von EPDM erfolgt vorzugsweise mit Metallocen oder Ziegler-Natta-Katalysatoren auf Basis von Vanadium-Verbindungen und Aluminium-Alkyl-Chloriden. Als Dien werden unkonjugierte Diene eingesetzt, von denen lediglich eine Doppelbindung an der Polymerkettenbildung beteiligt ist, so dass weitere Doppelbindungen außerhalb des direkten Grundkettengerüsts verbleiben und mit Schwefel peroxidisch oder phenolisch vernetzt werden können. Als Dien-Komponente werden Dicyclopentadien (DCP), 1,4-Hexadien oder Ethylidennorbornen (ENB, IUPAC: 5-Ethyliden-2-norbornen) eingesetzt. Die Diene unterscheiden sich bezüglich der Vernetzungsgeschwindigkeit. DCP hat die niedrigste, ENB die höchste Reaktivität. Das EPDM ist vorzugsweise eines, das mit Schwefel vernetzt wurde. Auf diese Weise können Bindungen der erfindungsgemäßen Zusammensetzung zu den Schwefelatomen aufgebaut werden.

EPDM wie auch alle anderen in dieser Erfindung genannten, schwefelvernetzbaren Kautschuke NR, IR, BR, SBR, CR, NBR, IIR werden ausführlich in Kap. 2.1. bis einschließlich 2.9. von " F. Röthemeyer, F. Sommer, Kautschuktechnologie, Carl Hanser Verlag München (2006), 2. Auflage" beschrieben. Hierauf wird im vollen Umfang Bezug genommen.

Die vorliegende Erfindung betrifft auch ein Verfahren zur Herstellung eines thermoplastischen Elastomers, wobei ein Styrol-Block-Copolymer (SBC) mit einem durchschnittlichen zahlenmittleren Molekulargewicht *M*ₙ von mehr als 70.000 g/mol, ein doppelbindungshaltiges Polymer mit einem Molanteil an Doppelbindungen im Bereich von 5 bis 95 Mol-%, bezogen auf die Monomereinheiten des Polymers, und ein nicht-elastomeres Polyolefin miteinander vermengt werden, worin der Gewichtsanteil des SBC im Bereich von 15 bis 40 Gew.-% liegt, bezogen auf das Gesamtgewicht der Zusammensetzung, und worin das Gewichtsverhältnis von SBC zu doppelbindungshaltigem Polymer im Bereich von 10:1 bis 4:1 liegt. Alle bevorzugten Merkmale der oben genannten erfindungsgemäßen thermoplastischen Elastomerzusammensetzung sind auch für die in dem/den erfindungsgemäßen Verfahren hergestellte(n) bzw. eingesetzte(n) thermoplastische(n) Zusammensetzung(en) bevorzugte Merkmale. In einer bevorzugten Ausführungsform ist die im erfindungsgemäßen Verfahren hergestellte Zusammensetzung die erfindungsgemäße thermoplastische Elastomerzusammensetzung.

In einer weiteren Ausführungsform der vorliegenden Erfindung ist es bevorzugt, dass die im erfindungsgemäßen Verfahren eingesetzten Komponenten bei einer Temperatur oberhalb des Schmelz- und Erweichungspunktes des nicht-elastomeren Polyolefins miteinander vermengt werden. Durch die Vermengung oberhalb des Schmelz- beziehungsweise Erweichungspunktes des nicht-elastomeren Polyolefins kann es in der thermoplastischen Elastomerzusammensetzung zu einer Teilvernetzung durch Polymerisation von Doppelbindungen kommen.

Deshalb betrifft die vorliegende Erfindung auch eine thermoplastische Elastomerzusammensetzung, die durch das erfindungsgemäße Verfahren hergestellt wurde, in dem die eingesetzten Komponenten bei einer Temperatur oberhalb des Schmelz- beziehungsweise Erweichungspunktes des nicht-elastomeren Polyolefins vermengt wurden. In anderen Worten soll erfindungsgemäß auch eine Zusammensetzung abgedeckt werden, bei der ein Teil der eingesetzten Komponenten beispielsweise durch Reaktion von Doppelbindungen miteinander vernetzt vorliegt. Es wurde allerdings von den Erfindern der vorliegenden Erfindung festgestellt, dass die Reaktion der Doppelbindungen untereinander in der erfindungsgemäßen Zusammensetzung nur unvollständig ist, so dass noch ausreichend Doppelbindungen zur Reaktion mit dem Gummi vorliegen.

Im Folgenden wird das erfindungsgemäße Verfahren zur Herstellung einer thermoplastischen Elastomerzusammensetzung genauer beschrieben:
Die thermoplastischen Elastomerzusammensetzungen gemäß der vorliegenden Erfindung können durch Vermengen/Mischen der unten genannten Komponenten A, B, C, D, E, F, G, H und I - soweit sie in den Zusammensetzungen vorliegen - hergestellt werden. Die Mischung kann dabei unter Verwendung von in der Kautschuktechnologie und Kunststofftechnologie bekannten Mischsystemen wie Knetern, Innenmischern, z. B. Innenmischern mit ineinander greifender oder tangierender Rotorgeometrie, sowie auch in kontinuierlich mischenden Anlagen wie Mischextrudern, z. B. Mischextrudern mit 2 bis 4 und mehr Wellenschnecken (z.B. Doppelschneckenextrudern), erfolgen.

Bei der Durchführung des erfindungsgemäßen Herstellungsverfahrens ist es wichtig, darauf zu achten, dass die Mischungstemperatur hoch genug ist, dass die Komponente C (nicht-elastomeres Polyolefin) in den plastischen Zustand überführt werden kann, jedoch dabei nicht geschädigt wird. Dies wird gewährleistet, wenn eine Temperatur oberhalb der Schmelz- oder Erweichungstemperatur der Komponente C gewählt wird. Besonders bevorzugt wird das Mischen der Komponenten - soweit sie in den Zusammensetzungen vorliegen - bei einer Temperatur im Bereich von 150°C bis 320°C, bevorzugt 160°C bis 280°C, besonders bevorzugt 180°C bis 250°C vorgenommen. Der Zeitraum für das Vermengen/Mischen bei den angegebenen Temperaturen liegt im Bereich von 0,5 min bis 2 min. Anschließend wird die Zusammensetzung auf Raumtemperatur abgekühlt.

Vorzugsweise werden in dem erfindungsgemäßen Verfahren vor dem Vermengen die Komponenten A, B, C, D, E, F, G, H und I - sofern in der erfindungsgemäßen Zusammensetzung enthalten - gemeinsam vorgelegt und bei Temperaturen oberhalb der Schmelz- oder Erweichungstemperaturen der Komponente C innig vermischt. Besonders bevorzugt ist für die Herstellung eine kontinuierliche Mischanlage, wie bspw. ein Extruder oder ein Doppelschneckenextruder. Durch die genannte Verfahrensführung wird erreicht, dass die Zusammensetzung nach dem Abschluss der Herstellung eine möglichst feine und gleichmäßige Verteilung der eingesetzten Komponenten erfährt.

Die erfindungsgemäßen Zusammensetzungen eignen sich hervorragend zur Bereitstellung thermoplastischer Elastomere mit sehr guten Eigenschaften, insbesondere mit sehr guter UV-Beständigkeit, niedriger Friktion bei gleichzeitig sehr guten elastischen Eigenschaften (Druckverformungsrest, Bruchdehnung und Zugfestigkeit). Ferner weisen die erfindungsgemäßen Zusammensetzungen sehr geringe bis keine Tendenz zum Ausölen von Weichmachern auf. Zudem weisen sie eine hervorragende Haftung zu schwefelvernetztem Gummi auf.

Die in der vorliegenden Anmeldung verwendeten Begriffe "umfassen", "enthalten" und "aufweisen" sollen auch in jedem Fall, in dem sie verwendet werden, den Begriff "bestehen aus" mitumfassen, so dass diese Ausführungsformen auch in dieser Anmeldung offenbart sind.

Die zuvor genannten und in den erfindungsgemäßen thermoplastischen Elastomerzusammensetzungen bzw. den erfindungsgemäßen Verfahren eingesetzten Komponenten werden im Weiteren durch folgende Buchstaben abgekürzt und sind im Folgenden genauer beschrieben:
- A:: SBC mit einem durchschnittlichen zahlenmittleren Molekulargewicht *M*ₙ von mehr als 70.000 g/mol
- B:: Doppelbindungshaltiges Polymer mit einem Molanteil an Doppelbindungen im Bereich von 5 bis 95 Mol-%
- C:: nicht-elastomeres Polyolefin
- D:: Phenolharz
- E:: Vernetzungshilfsstoff
- F:: Weichmacher
- G:: Molekularsieb
- H:: Stabilisatoren, Hilfsstoffe und Farbstoffe (Additive)
- I:: Füllstoff

### Komponente A: SBC mit einem durchschnittlichen zahlenmittleren Molekulargewicht Mₙ von mehr als 70.000 g/mol

Wie bereits weiter oben beschrieben, sind SBC-Copolymere aus verschiedenen Polymerblöcken, von denen mindestens ein Block ein Polystyrol-Block und mindestens ein Block ein Polyolefin-Block ist. Bevorzugt weist ein SBC die Struktur eines Triblock-Copolymers auf, bei dem der Mittelblock ein Polyolefin-Block ist, stärker bevorzugt ein Ethylen/Propylen-, Ethylen/Butylen- oder Isobutylen-Block. Weiterhin bevorzugt ist das SBC ein gesättigtes Polymer, d.h. ein Polymer, das entweder hydriert wurde oder schon direkt nach der Polymerisierung doppelbindungsfrei ist.

Ein erfindungsgemäßes Beispiel für ein SBC ist SEBS (Polystyrol-block-poly(ethylen-co-butylen)-block-polystyrol). Ein weiteres Beispiel für ein SBC, das erfindungsgemäß eingesetzt werden kann und nicht vernetzt ist, ist SEEPS (Polystyrol-block-poly(ethylen-co-(ethylen-propylen))-block-polystyrol). Ferner sind weitere Beispiele für SBC, die erfindungsgemäß eingesetzt werden können und nicht vernetzt sind, SEPS (Polystyrol-block-poly(ethylen-co-propylen)-block-polystyrol) und SIBS (Polystyrol-block-polyisobutylen-block-polystyrol) Weiterhin sind hier als Beispiele aber auch alle weiteren bekannten SBC zu nennen, die hydriert wurden und somit keine C-C-Doppelbindungen enthalten oder bereits nach der Polymerisation doppelbindungsfrei vorliegen. Ferner sind als erfindungsgemäße Beispiele jedoch auch alle unhydrierten SBC zu nennen wie beispielsweise SBS, SIS, SIBS. Ganz besonders bevorzugt als erfindungsgemäßes SBC ist dabei SEBS. Beispiele für erfindungsgemäß einzusetzende hydrierte bzw. gesättigte SBC sind unter den Handelsnamen Kraton®, Septon®, Europrene®, Taipol® und Sibstar® bekannt und kommerziell erhältlich.

Das SBC mit einem durchschnittlichen zahlenmittleren Molekulargewicht *M*ₙ von mehr als 70.000 g/mol liegt in der erfindungsgemäßen Zusammensetzung in einem Gewichtsanteil im Bereich von 15 bis 40 Gew.-%, bevorzugt im Bereich von 20 bis 35 Gew.-% vor, bezogen auf das Gesamtgewicht der erfindungsgemäßen Zusammensetzung.

### Komponente B: Doppelbindungshaltiges Polymer mit einem Molanteil an Doppelbindungen im Bereich von 5 bis 95 Mol-%

Das doppelbindungshaltige Polymer kann Doppelbindungen in der Hauptkette oder in der Seitenkette aufweisen. Das doppelbindungshaltige Polymer kann ein unhydriertes Styrol-Blockcopolymer oder ein schwefelvernetzbarer, unvernetzter Dien-Kautschuk sein.

Wie oben beschrieben, ist unter einem unhydrierten SBC eines zu verstehen, in dem mindestens ein Polystyrol-Block und mindestens ein Polyolefin-Block vorliegt, wobei der Polyolefin-Block aus beispielsweise Butadien oder Isopren aufgebaut sein kann. Bei der Polymerisierung des Diens wird eine der beiden Doppelbindungen für die Polymerisierung verwendet, die andere der beiden Doppelbindungen verbleibt nach der Polymerisierung im Polymer. Vorzugsweise ist das unhydrierte SBC ein lineares Triblock-Copolymer.

Beispiele hierfür sind SBS (Polystyrol-block-polybutadienblock-polystyrol), SIS (Polystyrol-block-polyisopren-block-polystyrol) und SIBS (Polystyrol-block-poly(isopren-co-butadien)-block-polystyrol). Ganz besonders bevorzugt ist das doppelbindungshaltige Polymer ein SIS. Kommerziell erhältliches SBS ist beispielsweise Kraton® D (Kraton), SIS ist beispielsweise von der Fa. Kuraray als Hybrar® erhältlich.

Unter die erfindungsgemäß als doppelbindungshaltiges Polymer zu verstehenden Dien-Kautschuke fallen sowohl Homopolymere aus Dienen, als auch statistische Copolymere aus mindestens zwei Dienen, sowie statistische Copolymere aus unterschiedlichen olefinischen Monomeren, beispielsweise ein oder mehreren Monoolefinen mit ein oder mehreren Dienen. In der Literatur findet sich für die statistischen Kautschuk-Copolymere von ein oder mehreren Monoolefinen mit ein oder mehreren Dienen auch der Begriff Olefin-Dien-Kautschuke. In dieser Erfindung wird die Unterscheidung zwischen Homopolymeren aus Dienen, statistischen Copolymeren aus Dienen und statistischen Copolymeren aus Olefinen und Dienen nicht gemacht. Alle vorstehenden Varianten werden als Dien-Kautschuke benannt.

Bevorzugt als erfindungsgemäße, doppelbindungshaltige Dien-Kautschuke sind solche, die schwefelvernetzbar sind. Ferner ist bevorzugt, dass die Dien-Kautschuke in der erfindungsgemäßen TPE-Zusammensetzung unvernetzt vorliegen.

Bevorzugt als Dien-Kautschuke sind Copolymere aus ein oder mehreren Olefinen und einem Dien. Als Olefine kommen hier vorzugsweise Ethylen, Propylen oder Butylen zum Einsatz, wobei Ethylen und Propylen bevorzugt sind. Als Diene kommen vorzugsweise nicht konjugierte Diene zum Einsatz, so dass das hergestellte Polymer in der Seitenkette eine Doppelbindung aufweist. Als Dien-Komponente werden Dicyclopentadien (DCP), 1,4-Hexadien oder Ethylidennorbornen (ENB, IUPAC: 5-Ethyliden-2-norbornen) eingesetzt. Die Diene unterscheiden sich bezüglich der Vernetzungsgeschwindigkeit. DCP hat die niedrigste, ENB die höchste Reaktivität. Der Dien-Kautschuk kommt erfindungsgemäß bevorzugt unvernetzt zum Einsatz. Ein besonders prominenter Vertreter ist der unvernetzte Ethylen-Propylen-Dien-Kautschuk (EPDM). Unvernetztes EPDM ist ein terpolymerer, synthetischer Kautschuk. EPDM gehört zu den statistischen Copolymeren mit gesättigtem Polymerhauptgerüst. Die Herstellung erfolgt vorzugsweise mit Metallocen oder Ziegler-Natta-Katalysatoren auf Basis von Vanadium-Verbindungen und Aluminium-Alkyl-Chloriden. Als Diene werden die zuvor genannten Diene eingesetzt. Diese Art der statistischen Dien-Kautschuke ist mit Schwefel, phenolisch oder peroxidisch vernetzbar, wobei sie erfindungsgemäß vorzugsweise unvernetzt oder nur teilvernetzt eingesetzt werden bzw. in der erfindungsgemäßen Zusammensetzung vorliegen.

Als weiterer bevorzugter Dien-Kautschuk ist ein Homopolymer, das aus einem Dien, vorzugsweise einem konjugierten Dien, polymerisiert wird, genannt. Ein besonders bevorzugtes Beispiel hierfür ist der Isopren-Kautschuk (IR), eine synthetisch produzierte Variante des Naturkautschuks. Sie unterscheidet sich von diesem in erster Linie durch die etwas geringere chemische Reinheit. Dies liegt daran, dass die zur Polymerisation eingesetzten Katalysatoren eine geringere Effektivität besitzen als die in der Natur vorkommenden Enzyme. Die Reinheit von Naturkautschuk liegt vorzugsweise bei mehr als 99,9%, wohingegen sie bei den synthetisch hergestellten IR - je nach eingesetztem Katalysator - nur etwa 92% bis 97% erreicht. Wie der Naturkautschuk ist auch IR peroxidisch, phenolisch oder mit Schwefel vernetzbar. Der Dien-Kautschuk auf Basis von Homopolymeren wird erfindungsgemäß vorzugsweise unvernetzt oder teilvernetzt eingesetzt, bzw. liegt in der erfindungsgemäßen Zusammensetzung unvernetzt oder teilvernetzt vor.

Ist das doppelbindungshaltige Polymer ein schwefelvernetzbarer, unvernetzter Dien-Kautschuk, so ist es bevorzugt, dass dieser einen Molanteil an Doppelbindungen im Bereich von 5 bis 40 Mol-%, stärker bevorzugt 7 bis 20 Mol-% aufweist, bezogen auf die Molanzahl an Monomereinheiten des Polymers.

Das doppelbindungshaltige Polymer wird in einer Menge eingesetzt, dass das Gewichtsverhältnis von SBC mit einem durchschnittlichen zahlenmittleren Molekulargewicht *M*ₙ von mehr als 70.000 g/mol (Komponente A)zu dem doppelbindungshaltigen Polymer (Komponente B) in der erfindungsgemäßen Zusammensetzung im Bereich von 10:1 bis 4:1, bevorzugt im Bereich von 8:1 bis 4:1 liegt.

### Komponente C: nicht-elastomeres Polyolefin

Das in der vorliegenden Erfindung eingesetzte nicht-elastomere Polyolefin kann jegliches Polyolefin sein, das sich zur Herstellung von thermoplastischen Elastomerzusammensetzungen eignet. Vorzugsweise ist das nicht-elastomere Polyolefin ein thermoplastisches Polyolefin.

Das nicht-elastomere Polyolefin ist vorzugsweise ein Polyethylen, ein Polypropylen oder ein Copolymer aus Ethylen und Propylen.

Erfindungsgemäß verwendbare Polyethylene sind beispielsweise HDPE (high density polyethylene), MDPE (medium density polyethylene), LDPE (low density polyethylene), LLDPE (linear low density polyethylene) und VLDPE (very low density polyethylene) .

Das Propylen ist vorzugsweise ein Homopolymer aus Propylen.

Das Copolymer aus Propylen und Ethylen ist vorzugsweise ein statistisches Copolymer.

Erfindungsgemäß können auch Kombinationen der genannten Polymere eingesetzt werden.

Für die Erfindung geeignete Polyolefine sind vor allem diejenigen, die sich für die Verarbeitung im Spritzguss eignen. Geeignete Polyolefine sind solche mit guten Fließeigenschaften und Steifigkeit.

Homopolymere von Propylen (hPP) sind kommerziell erhältlich, und es kann jedes dieser erhältlichen hPPs erfindungsgemäß eingesetzt werden.

Das hPP kann einen Schmelzindex-Wert gemäß ISO 1133 (bei 230°C mit 2,16 kg) im Bereich von 0,5 g/10 min bis 200 g/10 min, und bevorzugt im Bereich von 4 g/10 min bis 50 g/10 min; eine Zugfestigkeit gemäß ISO 527-1, -2 im Bereich von 15 MPa bis 50 MPa, und vorzugsweise im Bereich von 20 MPa bis 40 MPa; eine Bruchdehnung gemäß ISO 527-1, -2 im Bereich von 1% bis 500%, und vorzugsweise im Bereich von 10% bis 300% aufweisen.

Kommerziell erhältliche hPP sind beispielsweise Produkte der Lyondell-Basell, die unter dem Handelsnamen Moplen® erhältlich sind, wie Moplen® HP500N, Moplen® HP501L.

Statistische Polypropylen-Copolymere (rPP) sind ebenso kommerziell erhältlich und jedes dieser rPPs kann erfindungsgemäß verwendet werden. Als Comonomer ist Ethylen und/oder Buten bevorzugt.

Das rPP kann einen Schmelzindex gemäß ISO 1133 (bei 230°C mit 2,16 kg) im Bereich von 0,5 g/10 min bis 200 g/10 min, und vorzugsweise im Bereich von 4 g/10 min bis 50 g/10 min; eine Zugfestigkeit gemäß ISO 527-1, -2 im Bereich von 15 MPa bis 50 MPa, und vorzugsweise im Bereich von 20 MPa bis 40 MPa; eine Bruchdehnung gemäß ISO 527-1, -2 im Bereich von 1% bis 500%, und vorzugsweise im Bereich von 10% bis 300% aufweisen. Es können Polyethylene verschiedener Dichte erfindungsgemäß verwendet werden. Diese sind ausreichend kommerziell verfügbar.

Es kann jegliches Polyethylen verwendet werden, dessen Schmelzindex im Bereich von 0,5 g/10 min bis 10 g/10 min liegt. HDPE kann einen Schmelzindex gemäß ISO 1133 (bei 190°C mit 2,16 kg) im Bereich von 0,02 g/10 min bis 55 g/10 min, und vorzugsweise im Bereich von 0,9 g/10 min bis 10 g/10 min; eine Zugfestigkeit gemäß ISO 527-1, -2 im Bereich von 12 MPa bis 32 MPa, und vorzugsweise im Bereich von 20 MPa bis 30 MPa; eine Bruchdehnung gemäß ISO 527-1, -2 im Bereich von 50% bis 1200%, und vorzugsweise im Bereich von 600% bis 700% aufweisen.

LDPE kann einen Schmelzindex gemäß ISO 1133 (bei 190°C mit 2,16 kg) im Bereich von 0,5 g/10 min bis 200 g/10 min, und vorzugsweise im Bereich von 0,7 g/10 min bis 7 g/10 min; eine Zugfestigkeit gemäß ISO 527-1, -2 im Bereich von 6 MPa bis 33 MPa, und vorzugsweise im Bereich von 12 MPa bis 24 MPa; eine Bruchdehnung gemäß ISO 527-1, -2 im Bereich von 100% bis 800%, und vorzugsweise im Bereich von 500% bis 750% haben.

Besonders bevorzugt ist es erfindungsgemäß jedoch, dass das nicht-elastomere Polyolefin eines ist, das Propylen in seinen Wiederholungseinheiten umfasst. Noch stärker bevorzugt ist das nicht elastomere Polyolefin ein hPP.

Das nicht-elastomere Polyolefin wird vorzugsweise in einer Menge eingesetzt, dass das Gewichtsverhältnis von SBC mit einem durchschnittlichen zahlenmittleren Molekulargewicht *M*ₙ von mehr als 70.000 g/mol (Komponente A) zu dem nicht-elastomeren Polyolefin (Komponente C) in der erfindungsgemäßen Zusammensetzung im Bereich von 3:1 bis 0,5:1, stärker bevorzugt im Bereich von 2:1 bis 1:1 liegt.

### Komponente D: Phenolharz

Phenolharze kommen erfindungsgemäß dann zum Einsatz, wenn die erfindungsgemäße Zusammensetzung zusätzlich zu den Verbindungen zwischen dem überschüssigen Schwefel oder schwefelhaltigen Verbindungen des Vernetzungssystems des Gummis noch weitere Bindungen zwischen dem Gummi aufbauen soll. Hierbei können die Phenolharze mit Doppelbindungen des Gummis und Doppelbindungen des doppelbindungshaltigen Polymers der erfindungsgemäßen TPE-Zusammensetzung reagieren. Erfindungsgemäß verwendbare Phenolharze sind vorzugsweise solche, die unter Wasserabspaltung an mindestens zwei Stellen des Phenolharzes mit zwei verschiedenen Doppelbindungen eine Bindung eingehen können. Es können auch bromierte oder chlorierte Phenolharze eingesetzt werden. Im letzteren Fall kommt es dann nicht zur Wasserabspaltung, sondern zur Abspaltung von Chlor- oder Bromwasserstoff. Vorzugsweise kommen erfindungsgemäß Phenolharze mit ausreichend hoher Reaktivität bei Mischtemperaturen von mindestens 220°C zum Einsatz.

Zur Beschleunigung der Reaktion von Phenolharzen mit Doppelbindungen kommen dem Fachmann bekannte Vernetzungshilfsstoffe, z. B. anorganische Verbindungen zum Einsatz, wie sie untenstehend beschrieben sind.

Zur Vernetzung geeignete Phenolharze sind dem Fachmann bekannt, und werden üblicherweise durch Umsetzung von Phenol mit Aldehyden erhalten (Phenol-Formaldehydharz). Hierfür geeignete Phenolharze sind zum Beispiel die Umsetzungsprodukte von Octylphenol mit Formaldehyd, z.B. ist SP-1045 H (SP-1045, HRJ-10518 H von Schenectady International Inc.) geeignet, das ein Octylphenol-Formaldehydharz ist, das Methylolgruppen enthält, oder im Falle von bromierten Phenolharzen bromierte Octylphenolharze, beispielsweise solche mit den Handelsnamen SP-1055 oder SP-1056. Geeignete Cl-haltige Lewis-Säuren sind dem Fachmann bekannt. Bevorzugt wird SnCl₂ oder Chloropren-Kautschuk eingesetzt.

Das mindestens eine Phenolharz wird vorzugsweise - sofern vorhanden - in einer Menge eingesetzt, dass das Gewichtsverhältnis von SBC mit einem durchschnittlichen zahlenmittleren Molekulargewicht *M*ₙ von mehr als 70.000 g/mol (Komponente A) zu dem Phenolharz (Komponente D) in der erfindungsgemäßen Zusammensetzung im Bereich von 12:1 bis 5:1, stärker bevorzugt im Bereich von 10:1 bis 7:1 liegt.

### Komponente E: Vernetzungshilfsstoff

Zur Beschleunigung und Katalyse der Bildung von Bindungen zwischen der erfindungsgemäßen Zusammensetzung und dem Gummi können Vernetzungshilfsstoffe eingesetzt werden. Bevorzugt werden hier anorganische Säuren, wie beispielsweise SnCl₂ und/oder ZnO eingesetzt. Es können aber auch halogenhaltige Elastomere, wie bspw. Chloropren-Kautschuk, eingesetzt werden. Besonders bevorzugt wird ZnO eingesetzt, da dieses zudem als Katalysator wirkt.

Der Vernetzungshilfsstoff wird vorzugsweise - sofern vorhanden - in einer Menge eingesetzt, dass das Gewichtsverhältnis von SBC mit einem durchschnittlichen zahlenmittleren Molekulargewicht *M*ₙ von mehr als 70.000 g/mol (Komponente A) zu dem Vernetzungshilfsstoff (Komponente E) in der erfindungsgemäßen Zusammensetzung im Bereich von 40:1 bis 10:1, stärker bevorzugt im Bereich von 30:1 bis 15:1 liegt.

### Komponente F: Weichmacher

Geeignete Weichmacher sind dem Fachmann grundsätzlich bekannt. Erfindungsgemäß geeignete Weichmacher sind technische oder medizinische Mineral- oder Weißöle, native Öle, wie beispielsweise Soja- oder Rapsöl, ferner Alkylsulfonylester, insbesondere Alkylsulfonylphenylester, wobei die Alkylsubstituenten lineare und/oder verzweigte Alkylketten mit > 5C-Atomen enthalten.

Als geeignete Weichmacher können auch Mischungen der beschriebenen Substanzklassen eingesetzt werden.

Ein Beispiel eines kommerziell erwerblichen Weichmachers ist Shell Catenex T 145 S der Fa. Shell.

Der Weichmacher wird vorzugsweise - sofern vorhanden - in einer Menge eingesetzt, dass das Gewichtsverhältnis von SBC mit einem durchschnittlichen zahlenmittleren Molekulargewicht *M*ₙ von mehr als 70.000 g/mol (Komponente A) zu dem Weichmacher (Komponente F) in der erfindungsgemäßen Zusammensetzung im Bereich von 1,5:1 bis 0,2:1, stärker bevorzugt im Bereich von 1:1 bis 0,4:1 und noch stärker bevorzugt im Bereich von 0,8:1 bis 0,6:1 liegt.

### Komponente G: Molekularsieb

Wie weiter oben erwähnt, können in der erfindungsgemäßen Zusammensetzung auch Molekularsiebe zum Einsatz kommen. Hierbei sind wasserabsorbierende Molekularsiebe bevorzugt. Der Einsatz von Molekularsieben ist insbesondere dann von Vorteil, wenn in der erfindungsgemäßen Zusammensetzung auch Phenolharze, die bei der Vernetzung Wasser abspalten, eingesetzt werden. Bei der Reaktion dieser Phenolharze mit Doppelbindungen werden die abgespaltenen Wassermoleküle über das Molekularsieb gebunden. Somit wird das Gleichgewicht bei dieser Reaktion zugunsten des Reaktionsproduktes verschoben.

Das wasseradsorbierende Molekularsieb ist vorzugsweise ein zeolithisches Material. Unter dem Begriff "zeolithisches Material" werden klassische Zeolithe sowie deren Strukturanaloga, wie beispielsweise Alumophosphate oder Silicoalumophosphate verstanden. Bei Zeolithen handelt es sich allgemein um kristalline Alumosilikate, die in zahlreichen Modifikationen in der Natur vorkommen, aber auch synthetisch hergestellt werden können. Je nach Zeolithtyp können diese bis etwa 40% ihres Trockengewichts an Wasser speichern, das beim Erhitzen wieder abgegeben wird. Seit 1998 werden Zeolithe durch die International Mineralogical Association wie folgt definiert: "Ein Zeolith ist eine kristalline Substanz, deren Struktur durch ein Kristallgitter aus miteinander verbundenen Tetraedern, jeder bestehend aus einem Kation und vier Sauerstoffatomen, charakterisiert wird. Dieses Kristallgitter enthält offene Hohlräume in Form von Käfigen und Kanälen. Diese sind gewöhnlich durch Wassermoleküle und zusätzliche Kationen, welche austauschbar sind, besetzt. Die Kanäle sind groß genug, um Gastmoleküle passieren zu lassen. Wasserreiche Phasen können dehydrieren; die Entwässerung erfolgt meist bei Temperaturen unter etwa 400°C und ist größtenteils umkehrbar. Das Kristallgitter kann durch (OH-, F-) - Gruppen unterbrochen sein; diese besetzen eine Tetraeder-Spitze, die nicht mit einem benachbarten Tetraeder verbunden ist".

Die allgemeine Summenformel von Zeolithen lautet:

M_{x/n}[(AlO₂)ₓ(SiO₂)_{y}] • z H₂O,

wobei der Faktor n sich aus der Ladung des Metallions ergibt, z. B. bei Alkaliionen ist n=1 und bei Erdalkaliionen ist n=2. Der Faktor z gibt an, wie viele Wassermoleküle vom Zeolithen aufgenommen wurden. Das sogenannte Modul y/x kann gemäß der sogenannten Löwenstein-Regel nicht kleiner als 1 werden. Das Metall M ist typischerweise ein Kation eines Alkali-oder Erdalkalimetalls, kann aber auch ein Proton oder ein anderes anorganisches Kation wie beispielsweise NH₄⁺ sein.

Zeolithe besitzen eine große innere Oberfläche (teilweise bis über 1000 m²/g) und starke elektrostatische Felder im Kristallgitter. Aufgrund dieser Eigenschaften kommen Zeolithen als Adsorbentien bei Sorptionsprozessen eine große Bedeutung zu. Eine innere Oberfläche von über 1000 m²/g kann nur ein feinporöser Stoff bereitstellen. Sie kommt im Wesentlichen durch die sehr feinen Mikroporen zustande. Kennzeichnend ist ein verzweigtes Porensystem. Man unterscheidet zwischen Makro-, Meso-, Mikro- und Submikroporen. Unter Makroporen werden Poren mit einem Porendurchmesser von größer 50 nm, unter Mesoporen Poren mit einem Porendurchmesser von 2-50 nm, unter Mikroporen Poren mit einem Porendurchmesser von 0,4 - 5,0 nm und unter Submikroporen Poren mit einem Porendurchmesser von kleiner 0,4 nm verstanden.

Für die Sorptionsprozesse erfindungsgemäß von Bedeutung sind die Mikroporen und Mesoporen, die bei erfindungsgemäß zu verwendenden Zeolithen vorzugsweise größer oder gleich 50% des Porenvolumens (VDI Richtlinie 3674) ausmachen.

Erfindungsgemäß bevorzugt ist es, dass ein Zeolith eingesetzt wird, der mindestens 20 Gew.-% seines Trockengewichts an Wasser speichern kann. Weiterhin ist es bevorzugt, dass der Schmelzpunkt des Zeolithen größer als die Herstellungs- oder Verarbeitungstemperatur der thermoplastischen Elastomerzusammensetzung ist.

Weiterhin ist es bevorzugt, dass die durchschnittliche Porengröße der Mikroporen nicht größer als 3 nm ist, d.h. im Bereich von 0,4 - 3 nm liegt. Die Dichte des erfindungsgemäß verwendbaren Zeolithen bei 20 °C liegt vorzugsweise im Bereich von 1,9 g/cm³ bis 2,4 g/cm³. Weiterhin ist es bevorzugt, dass der Schmelzpunkt des Zeolithen bei größer 400 °C liegt.

Die BET-Oberfläche der erfindungsgemäß verwendbaren Zeolithe liegt vorzugsweise im Bereich von 500 m²/g bis 1200 m²/g, noch stärker bevorzugt von 800 m²/g bis 1000 m²/g. Die BET-Oberfläche wird erfindungsgemäß gemäß der DIN ISO 9277:2003-05 gemessen.

Erfindungsgemäß einsetzbare Molekularsiebe sind beispielsweise unter dem Handelsnamen Rhenogran Zeolithe 70 von Lanxess erhältlich.

Das Molekularsieb wird vorzugsweise - sofern vorhanden - in einer Menge eingesetzt, dass das Gewichtsverhältnis von SBC mit einem durchschnittlichen zahlenmittleren Molekulargewicht *M*ₙ von mehr als 70.000 g/mol (Komponente A) zu dem Molekularsieb (Komponente G) in der erfindungsgemäßen Zusammensetzung im Bereich von 20:1 bis 8:1 liegt.

### Komponente H: Stabilisatoren, Hilfsstoffe und Farbstoffe (Additive)

Geeignete Additive sind z.B. Verarbeitungshilfsstoffe, Metallseifen, Fettsäuren und Fettsäurederivate, Faktis ([Kunstwort]: kautschukähnlicher Soff, der z.B. durch Einwirken von Schwefel oder Schwefelchlorid auf trocknende Öle gewonnen wird; dient zum Strecken von Kautschuk), Alterungs-, UV- oder Ozonschutzmittel wie Ozonschutzwachse, Antioxidantien, z.B. Polycarbodiimide (z.B. Rhenogran®, PCD-50), substituierte Phenole, substituierte Bisphenole, Dihydrochinoline, Diphenylamine, Phenylnaphthylamine, Paraphenylendiamine, Benzimidazole, Paraffinwachse, mikrokristalline Wachse, Pigmente, Farbstoffe wie Titandioxid, Litophone, Zinkoxid, Eisenoxid, Ultramarinblau, Chromoxid, Antimonsulfit; Stabilisatoren wie Wärmestabilisatoren, Stabilisatoren gegen Bewitterung; Oxidationsschutzmittel, z.B. p-Dicumyldiphenylamin (z.B. Naugard® 445), styrolisiertes Diphenylamin (z.B. Vulcanox® DDA), Zinksalz von Methylmercaptobenzimidazol (z.B. Vulcanox® ZMB2), polymerisiertes 1,2-Dihydro-2,2,4-trimethylchinolin (z.B. Vulcanox® HS), Thiodiethylen-bis(3,5-di-tert-butyl-4-hydroxy)hydrocinamat, Tiodiethylen-bis[3-(3,5-di-tert-butyl-4-hydroxyphenyl)propionat] (z.B. Irganox® 1035), Gleitmittel, Entformungsmittel, Antiflammmittel (Flammschutzmittel), Haftvermittler, Markierungsstoffe, Mineralien sowie Kristallisationsbeschleuniger und -verzögerer.

Als Prozesshilfsstoffe und Stabilisatoren können die folgenden verwendet werden: Antistatika, Antischäummittel, Gleitmittel, Dispergiermittel, Trennmittel, Anti-Blocking-Agentien, Radikalfänger, Antioxidantien, Biozide, Fungizide, UV-Stabilisatoren, sonstige Lichtschutzmittel, Metalldesaktivatoren, des Weiteren auch Additive wie Schäumhilfen, Treibmittel, Flammschutzmittel, Rauchgasunterdrücker, Schlagzähmodifikatoren, Haftmittel, Anti-Fogging-Mittel, Farbstoffe, Farbpigmente, Farbmasterbatches, Viskositätsmodifikatoren und Mittel zum Alterungsschutz.

### Besonders bevorzugt werden als Hilfsstoffe UV-Stabilisatoren und Antioxidantien eingesetzt.

Additive werden vorzugsweise - sofern vorhanden - in einer Menge eingesetzt, dass das Gewichtsverhältnis von SBC mit einem durchschnittlichen zahlenmittleren Molekulargewicht *M*ₙ von mehr als 70.000 g/mol (Komponente A) zu den Additiven (Komponente G) in der erfindungsgemäßen Zusammensetzung im Bereich von 80:1 bis 20:1, stärker bevorzugt im Bereich von 50:1 bis 30:1 liegt.

### Komponente I: Füllstoff

Geeignete Füllstoffe sind z.B. Ruß, Kreide (Calciumcarbonat), Kaolin, Kieselerde, Talkum (Magnesiumsilicat), AluminiumoxidHydrat, Aluminiumsilicat, Calciumcarbonat (), Magnesiumcarbonat, Calciumsilicat, Magnesiumsilicat, Bariumsulfat, Zinkcarbonat, calciniertes Kaolin (z.B. Polestar® 200 P), Calciumoxid, Magnesiumoxid, Titanoxid, Aluminiumoxid, Zinkoxid, silanisierte Kaoline, silanisiertes Silicat, beschichtete Kreide, behandelte Kaoline, pyrogene Kieselsäure, hydrophobierte pyrogene Kieselsäure (z.B. Aerosil® 972), synthetische amorphe Fällungskieselsäure (Silica), Industrieruß, Graphit, nanoskalige Füllstoffe wie Kohlenstoff-Nanofibrillen, Nanoteilchen in Plättchenform oder nanoskalige Siliciumdioxid-Hydrate und Mineralien. Besonders bevorzugt wird als Füllstoff ein Calciumcarbonat, bevorzugt der Fa. Bassermann minerals (Omyacarb 5 Gu), eingesetzt.

Der Füllstoff wird vorzugsweise in einer Menge eingesetzt, dass das Gewichtsverhältnis von SBC mit einem durchschnittlichen zahlenmittleren Molekulargewicht *M*ₙ von mehr als 70.000 g/mol (Komponente A) zu dem Füllstoff (Komponente I) in der erfindungsgemäßen Zusammensetzung im Bereich von 3:1 bis 0,5:1, stärker bevorzugt im Bereich von 2:1 bis 1:1 liegt.

Die vorliegende Erfindung soll nun durch die folgenden Ausführungsbeispiele genauer erläutert werden. Die folgenden Ausführungsbeispiele haben nur exemplarischen Charakter und dienen nicht dazu, die vorliegende Erfindung darauf zu beschränken.

### Beispiele:

### Bestimmungsmethoden und Definitionen:

Die Bestimmung des mittleren Molekulargewichts *M*ₙ erfolgt durch Gel-Permeationschromatographie, vorzugsweise mit einem Gerät der Fa. Agilent, Typ: PL-GPC 220 High Temperature GPC/SEC System.

Die Anzahl bzw. der Molanteil der Doppelbindungen des doppelbindungshaltigen Polymers wird hierin aus der Molzahl/Anzahl der für die Polymerisation eingesetzten Monomereinheiten und der nach der Polymerisation noch im Polymer verbliebenen Doppelbindungen abgeleitet bzw. berechnet.

Die Bestimmung der Dichte erfolgt gemäß DIN EN ISO 1183-1.

Die Bestimmung der Shore-Härte erfolgt gemäß DIN EN ISO 868 und DIN ISO 7619-1.

Unter der Zugfestigkeit versteht man die maximale mechanische Zugspannung, die ein Werkstoff aushält, bevor er bricht/reißt. Sie wird im Zugversuch aus der maximal erreichten Zugkraft bezogen auf den ursprünglichen Querschnitt der (genormten) Probe errechnet und in N/mm² angegeben.

Die Bruchdehnung ist ein Materialkennwert, der die bleibende Verlängerung des Bruches, bezogen auf die Anfangsmesslänge, angibt. Die Bruchdehnung ist bei der Werkstoffprüfung eine von vielen Kenngrößen und charakterisiert die Verformungsfähigkeit eines Werkstoffes. Sie ist die auf die Anfangsmesslänge *L*₀ einer Probe im Zugversuch bezogene bleibende Längenänderung Δ*L* nach erfolgtem Bruch. Diese Längenänderung wird in % angegeben.

Der Druckverformungsrest ist ein Maß dafür, wie sich (thermoplastische) Elastomere bei lang andauernder, konstanter Druckverformung und anschließender Entspannung verhalten. Nach DIN ISO 815 wird der Druckverformungsrest (DVR, engl. compression set) bei konstanter Verformung gemessen. Dieser stellt den Verformungsanteil des Testmaterials dar. Viele Testverfahren für Elastomere, wie z.B. die Zugfestigkeit charakterisieren die Qualität und Beschaffenheit des Materials. Der DVR hingegen ist ein wichtiger Faktor, der vor Einsatz eines Materials für einen bestimmten Einsatzzweck beachtet werden muss. Besonders für den Einsatz von Dichtungen und Unterlegplatten aus Elastomeren ist die bleibende Verformung, der Druckverformungsrest (DVR) eine wichtige Kenngröße. Zur Bestimmung dieser Größe wird ein zylindrischer Prüfkörper um z.B. 25 % zusammengedrückt und bei bestimmter Temperatur eine gewisse Zeit so gelagert. Die Temperatur und das Medium (meist Luft, aber auch Öle und andere Gebrauchsflüssigkeiten) für den Druckverformungstest hängen von dem zu testenden Material, seinem geplanten Einsatzzweck und dem Versuchsaufbau ab (z.B. 24 h bei 150 °C). 30 Minuten nach der Entlastung wird bei Raumtemperatur wieder die Höhe gemessen und daraus die bleibende Verformung ermittelt. Ein Druckverformungsrest von 0 % bedeutet, dass der Körper seine ursprüngliche Dicke wieder voll erreicht hat, ein DVR von 100 % sagt, dass der Körper während des Versuchs völlig verformt wurde und keine Rückstellung zeigt. Die Berechnung erfolgt nach folgender Formel: DVR (%) = ( L₀ - L₂ ) / ( L₀ - L₁ ) x 100 %, wobei:
DVR = Druckverformungsrest in %
L₀ = Höhe des Probekörpers vor der Prüfung
L₁ = Höhe des Probekörpers während der Prüfung (Distanzstück)
L₂ = Höhe des Probekörpers nach der Prüfung.

Weiterhin wurde die Kraft in MPa gemäß DIN 53504/ISO 37 gemessen, die benötigt wird, um das thermoplastische Elastomer um 100%, 200% bzw. 300% zu dehnen (Dehnkraft) . Hierbei wird ein Körper - wie er in der genannten Norm definiert ist - genommen und unter Messung der benötigten Kraft um die angegebene Länge gedehnt.

Die Bestimmung der Weiterreißfähigkeit erfolgt gemäß DIN ISO 34-1.

Der Abrieb der thermoplastischen Elastomerzusammensetzungen wird gemessen, indem ein 6 mm hoher Zylinder mit 16 mm Durchmesser über 40 m Schmirgelpapier mit Körnung 60 mit einem Anpressdruck von 10 N gerieben wird.

Die Haftung der thermoplastischen Elastomerzusammensetzungen auf EPDM (Typ: AA6AXZ oder AA7DOZ; Hersteller: Gummiwerk Kraiburg) wird folgendermaßen bestimmt: Eine 2 mm dicke EPDM-Platte mit den Maßen 3 cm x 6 cm wird mit der erfindungsgemäßen thermoplastischen Elastomerzusammensetzung an zwei Seiten umspritzt. Für die Bestimmung der absoluten Haftung (Einleger) wird die Kraft (in N) in einer Zugprüfmaschine gemessen, die benötigt wird, das EPDM von dem erfindungsgemäßen thermoplastischen Elastomer entlang der Kante von 3 cm zu trennen. Für die Bestimmung der relativen Haftung (S2) werden sogenannte S2-Prüfstäbe herausgeschnitten und in eine Zugprüfmaschine eingespannt. Es wird die Kraft pro Fläche (N/mm²) bestimmt, die benötigt wird, um das EPDM von dem erfindungsgemäßen thermoplastischen Elastomer zu trennen.

Unter Friktion oder Gleitreibung versteht man die Kraft, die notwendig ist, um einen Schlitten mit einem bestimmten Prüfgewicht mit konstanter Geschwindigkeit über eine Plattenoberfläche der Prüfplatten zu bewegen. Zur Bestimmung der Gleitreibung werden Prüfplatten aus der erfindungsgemäßen thermoplastischen Elastomerzusammensetzung mit den Dimensionen 125 mm x 125 mm x 2 mm mittels Spritzguss hergestellt. Die dabei erhaltene Oberfläche sollte gleichmäßig sein, d.h. keine Wellen aufweisen. Zur Bestimmung der Friktion wird die Prüfplatte in einem Prüfstand eingespannt. Ein 400 g Gewicht mit den Maßen 45 mm x 30 mm x 18,8 mm wird an der Unterseite über die gesamte Oberfläche mit einer Glasplatte versehen. Das Gewicht wird mit der Seite der Glasplatte auf die Prüfplatte aufgesetzt, und die Friktion wird mittels einer Zwick Zugprüfmaschine Nr. Z010/TN2A n. DIN 51220, 51221, 51223, 51302 mit einem 2,5 kN Kraftaufnehmer mit Herstellerprüfzertifikat M nach DIN 55350 Teil 18 bestimmt, indem das Gewicht 7 cm über die Prüfplatte gezogen wird. Auf diese Weise ergeben sich auch die dimensionslosen Größen der Haft- und der Gleitreibungszahl.

Der sogenannte "Florida"-Test wird gemäß der Konzernnorm PV 3930 der Volkswagen AG durchgeführt.

Der sogenannte "Kalahari"-Test wird gemäß der Konzernnorm PV 3929 der Volkswagen AG durchgeführt.

Ausführungsbeispiele:

Tabelle 1 gibt die verwendeten Abkürzungen für die in den Beispielen eingesetzten Komponenten an:

**Tabelle 1:**

| **Komponente** | **Rohstoff** |
|---|---|
| A | SBC mit einem durchschnittlichen zahlenmittleren Molekulargewicht *M*ₙ von mehr als 70.000 g/mol (kurz: SBC) |
| B | Doppelbindungshaltiges Polymer mit einem Molanteil an Doppelbindungen |
| | im Bereich von 5 bis 95 Mol-% (kurz: DbhP) |
| C | nicht-elastomeres Polyolefin |
| D | Phenolharz |
| E | Vernetzungshilfsstoff |
| F | Weichmacher |
| G | Molekularsieb |
| H | Stabilisatoren, Hilfsstoffe und Farbstoffe (Additive) |
| I | Füllstoff |

### Beispiele 1 bis 3: Herstellung einer erfindungsgemäßen thermoplastischen Elastomerzusammensetzung:

Es werden gemäß dem oben genannten Herstellungsverfahren thermoplastische Elastomerzusammensetzungen mit den aus Tabellen 2 und 3 ersichtlichen Bestandteilen hergestellt. Das in den Beispielen eingesetzte SBC ist eines mit einem Molekulargewicht *M*ₙ von >70.000 g/mol. Das eingesetzte DbhP ist eines, das zu 30 Gew.-% aus Styrol und zu 70 Gew.-% aus Isopren-Einheiten polymerisiert wird, d.h. 78 mol-% Doppelbindungen aufweist. Für das Vermengen der eingesetzten Komponenten wird ein Doppelschneckenextruder verwendet. In Tabelle 4 sind die mechanischen Messwerte angegeben. Die Tabelle 5 gibt mechanische Daten nach der Heißluftalterung an.

### Vergleichsbeispiel: Allruna® Sondertype für Haftung an Gummi

Als Vergleich wurde Allruna® der Fa. Allod eingesetzt. Das Allruna® ist auf Basis von SBC: Auch hier sind Daten für die Heißluftalterung in Tabelle 5 angegeben.

**Tabelle 2:**

| **Zusammensetzungen** | | | | |
|---|---|---|---|---|
| | | **Beispiel 1** | **Beispiel 2** | **Beispiel 3** |
| Rohstoff | Komponente | | | |
| SBC | A | 85 | 85 | 85 |
| DbhP | B | 15 | 15 | 15 |
| nicht-elastomeres Polyolefin | C | 51 | 51 | 51 |
| Phenolharz | D1 | 10 | | |
| | D2 | | 10 | |
| Vernetzungshilfsstoff | E | 4 | 4 | 4 |
| Weichmacher | F | 120 | 120 | 120 |
| Molekularsieb | G | | | |
| Stabilisatoren, Hilfsstoffe und Farbstoffe | H | | | |
| Additiv 1 | | 10 | 10 | 10 |
| Additiv 2 | | 0,79 | 0,79 | 0,79 |
| Additiv 3 | | 0,41 | 0,41 | 0,41 |
| Additiv 4 | | 0,41 | 0,41 | 0,41 |
| Additiv 5 | | 0,34 | 0,34 | 0,34 |
| Additiv 6 | | 0,34 | 0,34 | 0,34 |
| Additiv 7 | | 0,17 | 0,17 | 0,17 |
| Füllstoff | I | 50 | 50 | 50 |

**Tabelle 3:**

| **Eingesetzte Rohstoffe** | | | |
|---|---|---|---|
| | | | |
| **Rohstoff** | **Komponente** | **Hersteller** | **Typ** |
| SBC | A | Versalis (Eni Group) | Europrene® SOLTH2315P |
| DbhP | B | Kuraray | HYBRAR® 5127 |
| nicht-elastomeres Polyolefin | C | Entec | PP HP12 |
| Phenolharz | D1 | SI Group | RESIN HRJ-10518 H |
| | D2 | SI Group | RESIN SP 1045 H |
| Vernetzungshilfsstoff | E | Bayer | ZnO aktiv |
| Weichmacher | F | Shell | Shell Catenex® T 145 S |
| Stabilisatoren, Hilfsstoffe und Farbstoffe | H | | |
| Additiv 1 | | Cabot | Plasblak® PP6331 |
| Additiv 2 | | BASF | UVA 26 |
| Additiv 3 | | SABO | UV HALS 62 |
| Additiv 4 | | BASF | CHIMASORB® 944 FDL |
| Additiv 5 | | BASF | AO 1330 |
| Additiv 6 | | BASF | AO Phosphit |
| Additiv 7 | | BASF | Irganox® 3052 FF |
| Füllstoff | I | BASSERMAN minerals | Omyacarb® 5 Gu |

**Tabelle 4:**

| **Mechanische Werte** | | | | | |
|---|---|---|---|---|---|
| | | **Beispiel 1** | **Beispiel 2** | **Beispiel 3** | **Vergleichsbeispiel** |
| **Wert** | **Einheit** | | | | |
| Dichte | g/cm³ | 0,998 | 1,009 | 1,003 | 0,927 |
| Härte | ShA | 72 | 71 | 68 | 67 |
| Zugfestigkeit | N/mm² | 11 | 10,6 | 9 | 17 |
| Bruchdehnung | % | 737 | 741 | 758 | 867 |
| 100% | MPa | 2,7 | 2,5 | 2,1 | 2,4 |
| 200% | MPa | 3,3 | 3,1 | 2,5 | 2,9 |
| 300% | MPa | 3,9 | 3,7 | 3,0 | 3,6 |
| Weiterreißfähigkeit | N/mm² | 25,9 | 24,8 | 21,8 | 25,1 |
| Druckverformungsrest bei 70°C/22h | % | 45,0 | 45,0 | 48,0 | 47,0 |
| Druckverformungsrest bei 100°C/22h | % | 63,0 | 65,0 | 75,0 | 54,0 |
| Haftung (S2) auf EPDM (AA6AXZ) | N/mm² | 2,7 | 2,8 | 3,0 | 3,3 |
| Haftung (Einleger) auf EPDM (AA6AXZ) | N | 212 | 234 | 173 | 256 |
| Haftung (S2) auf EPDM (AA7DOZ) | N/mm² | 2,9 | 2,7 | 2,8 | 3,9 |
| Haftung (Einleger) auf EPDM (AA7DOZ) | N | 223 | 206 | 166 | 232 |
| Friktion (400 g, trocken) | N | 2,78 | 2,27 | 3,09 | 6,29 |
| Gleitreibungszahl (400 g, trocken) | dimensions los | 0,71 | 0,58 | 0,79 | 1,6 |
| Haftreibungszahl (400 g, trocken) | dimensions los | 0,73 | 0,65 | 0, 68 | 1,48 |

| | | | | | |
|---|---|---|---|---|---|
| Die Werte für Dichte, Härte, Zugfestigkeit, Bruchdehnung, Dehnkraft(100%, 200%, 300%), Weiterreißfähigkeit, Haftung, Friktion, Gleit- und Haftreibungszahl sind bei Raumtemperatur aufgenommen. | | | | | |

**Tabelle 5:**

| Gemessene Größe | Zeitraum der Behandlung | Medium | Temperatur | Beispiel 1 | Beispiel 2 | Beispiel 3 | Vergleichsbeispiel |
|---|---|---|---|---|---|---|---|
| Zugfestigkeit (N/mm²) | Startwert | Luft | 90 °C | 11,7 | 10,9 | 9,5 | 17,0 |
| | 9 Wochen | | | 11,2 | 11,1 | 9,9 | 16,6 |
| Bruchdehnung (%) | Startwert | | | 759 | 743 | 737 | 867 |
| | 9 Wochen | | | 744 | 740 | 739 | 862 |
| Zugfestigkeit (N/mm²) | Startwert | | 120 °C | 11,7 | 10,9 | 9,5 | 17,0 |
| | 9 Wochen | | | 9,5 | 9,9 | 9,9 | 18,0 |
| Bruchdehnung (%) | Startwert | | | 759 | 743 | 737 | 867 |
| | 9 Wochen | | | 754 | 747 | 748 | 854 |
| Oberfläche nach Alterung | 9 Wochen | | 90 °C | trocken | trocken | trocken | klebrig |

**Tabelle 6:**

| Kalahari-Test | Beurteilung | Zeit | Bsp. 1 | Bsp. 2 | Bsp. 3 | Vergleichsbeispiel |
|---|---|---|---|---|---|---|
| Risse | Visuell | 1500h | keine | keine | keine | keine |
| öl-Ausbluten | Visuell | 100h | keines | keines | keines | ölt nach 100h leicht aus |
| Oberfläche | Haptisch | 1500h | trocken | trocken | trocken | klebrig |
| Haftkante | Visuell | 1500h | unverändert | unverändert | unverändert | Leichtes Quellen |
| Graumaßstab | Visuell | 1500h | 4 | 4 | 3,5 | 4,5 |

**Tabelle 7:**

| Florida-Test | Beurteilung | Zeit | Bsp. 1 | Bsp. 2 | Bsp. 3 | Vergleichsbeispiel |
|---|---|---|---|---|---|---|
| Risse | Visuell | 1500h | keine | keine | keine | keine |
| Öl-Ausbluten | Visuell | 100h | keines | keines | keines | Ölt nach 100h leicht aus |
| Oberfläche | Haptisch | 1500h | trocken | trocken | trocken | klebrig |
| Haftkante | Visuell | 1500h | unverändert | unverändert | unverändert | Leichtes Quellen |
| Graumaßstab | Visuell | 1500h | 4,5 | 4 | 4,5 | 5 |

## Patentansprüche

1. Thermoplastische Elastomerzusammensetzung, die ein Styrol-Block-Copolymer (SBC) mit einem durchschnittlichen zahlenmittleren Molekulargewicht *M*ₙ von mehr als 70.000 g/mol, ein doppelbindungshaltiges Polymer mit einem Molanteil an Doppelbindungen im Bereich von 5 bis 95 Mol-%, bezogen auf die Monomereinheiten des Polymers, und ein nicht-elastomeres Polyolefin umfasst, worin der Gewichtsanteil des SBC im Bereich von 15 bis 40 Gew.-% liegt, bezogen auf das Gesamtgewicht der Zusammensetzung, und worin das Gewichtsverhältnis von SBC zu doppelbindungshaltigem Polymer im Bereich von 10:1 bis 4:1 liegt.

2. Zusammensetzung nach Anspruch 1, worin das SBC ein Doppelbindungsfreies SBC ist.

3. Zusammensetzung nach Anspruch 1 oder 2, worin das SBC ein lineares Triblock-Copolymer ist.

4. Zusammensetzung nach einem der Ansprüche 1 bis 3, worin das SBC einen Polyolefin-Block, vorzugsweise einen Ethylen/Propylen- oder Ethylen/Butylen-Block aufweist.

5. Zusammensetzung nach einem der Ansprüche 1 bis 4, worin das doppelbindungshaltige Polymer ein unhydriertes Styrol-Blockcopolymer oder ein schwefelvernetzbarer, unvernetzter Dien-Kautschuk ist, vorzugsweise Styrol-Isopren-Styrol-Blockcopolymer, unvernetztes EPDM oder Isopren-Kautschuk.

6. Zusammensetzung nach Anspruch 5, worin das doppelbindungshaltige Polymer ein unhydriertes Styrol-Blockcopolymer ist und einen Molanteil an Doppelbindungen im Bereich von 50 bis 90 Mol-% aufweist, oder worin das doppelbindungshaltige Polymer ein schwefelvernetzbarer, unvernetzter Dien-Kautschuk ist und einen Molanteil an Doppelbindungen im Bereich von 5 bis 40 Mol-% aufweist, jeweils bezogen auf die Monomereinheiten des Polymers.

7. Zusammensetzung nach einem der Ansprüche 1 bis 6, die ein Phenolharz aufweist.

8. Zusammensetzung nach Anspruch 7, worin das Phenolharz ein Phenolharz auf Basis von Octylphenol ist.

9. Zusammensetzung nach einem der Ansprüche 1 bis 8, die eine oder mehrere der folgenden Additive enthält: Weichmacher, Vernetzungshilfsstoff, Molekularsieb, Stabilisator, Hilfsstoff, Farbstoff und Füllstoff.

10. Verwendung einer thermoplastischen Elastomerzusammensetzung zur Herstellung eines Verbundmaterials mit Gummi auf Basis von vernetzten Dien-Kautschukmischungen, wobei die thermoplastische Elastomerzusammensetzung ein Styrol-Block-Copolymer (SBC) mit einem durchschnittlichen zahlenmittleren Molekulargewicht *M*ₙ von mehr als 70.000 g/mol, ein doppelbindungshaltiges Polymer mit einem Molanteil an Doppelbindungen im Bereich von 5 bis 95 Mol-%, bezogen auf die Monomereinheiten des Polymers, und ein nicht-elastomeres Polyolefin umfasst.

11. Artikel, der eine thermoplastische Elastomerzusammensetzung und einen Gummi auf Basis von vernetzten Dien-Kautschukmischungen, vorzugsweise EPDM, umfasst, wobei die thermoplastische Elastomerzusammensetzung ein Styrol-Block-Copolymer (SBC) mit einem durchschnittlichen zahlenmittleren Molekulargewicht *M*ₙ von mehr als 70.000 g/mol, ein doppelbindungshaltiges Polymer mit einem Molanteil an Doppelbindungen im Bereich von 5 bis 95 Mol-%, bezogen auf die Monomereinheiten des Polymers, und ein nicht-elastomeres Polyolefin umfasst.

12. Verfahren zur Herstellung einer thermoplastischen Elastomerzusammensetzung, wobei ein Styrol-Block-Copolymer (SBC) mit einem durchschnittlichen zahlenmittleren Molekulargewicht *M*ₙ von mehr als 70.000 g/mol, ein doppelbindungshaltiges Polymer mit einem Molanteil an Doppelbindungen im Bereich von 5 bis 95 Mol-%, bezogen auf die Molanzahl an allen für die Polymerisierung verwendeten Monomereinheiten des Polymers, und ein nicht-elastomeres Polyolefin miteinander vermengt werden, worin der Gewichtsanteil des SBC im Bereich von 15 bis 40 Gew.-% liegt, bezogen auf das Gesamtgewicht der Zusammensetzung, und worin das Gewichtsverhältnis von SBC zu doppelbindungshaltigem Polymer im Bereich von 10:1 bis 4:1 liegt.

13. Verfahren nach Anspruch 12, worin das Vermengen bei einer Temperatur oberhalb des Schmelz- und/oder Erweichungspunktes des nicht-elastomeren Polyolefins erfolgt.

14. Thermoplastische Elastomerzusammensetzung, die nach einem Verfahren nach Anspruch 13 erhältlich ist.

## Claims

1. Thermoplastic elastomer composition, which comprises a styrene block copolymer (SBC) with a mean number-average molecular weight *M*ₙ of more than 70,000 g/mol, a double-bond-containing polymer with a molar proportion of double bonds in the range of from 5 to 95 mol-%, relative to the monomer units of the polymer, and a non-elastomeric polyolefin, wherein the proportion by weight of SBC lies in the range of from 15 to 40 wt.-%, relative to the total weight of the composition, and wherein the weight ratio of SBC to double-bond-containing polymer lies in the range of from 10:1 to 4:1.

2. Composition according to claim 1, wherein the SBC is a double-bond-free SBC.

3. Composition according to claim 1 or 2, wherein the SBC is a linear triblock copolymer.

4. Composition according to one of claims 1 to 3, wherein the SBC has a polyolefin block, preferably an ethylene/propylene or ethylene/butylene block.

5. Composition according to one of claims 1 to 4, wherein the double-bond-containing polymer is an unhydrogenated styrene block copolymer or a sulfur-crosslinkable, uncrosslinked diene rubber, preferably styrene-isoprene-styrene block copolymer, uncrosslinked EPDM or isoprene rubber.

6. Composition according to claim 5, wherein the double-bond-containing polymer is an unhydrogenated styrene block copolymer and has a molar proportion of double bonds in the range of from 50 to 90 mol-%, or wherein the double-bond-containing polymer is a sulfur-crosslinkable, uncrosslinked diene rubber and has a molar proportion of double bonds in the range of from 5 to 40 mol-%, in each case relative to the monomer units of the polymer.

7. Composition according to one of claims 1 to 6, which has a phenolic resin.

8. Composition according to claim 7, wherein the phenolic resin is a phenolic resin based on octylphenol.

9. Composition according to one of claims 1 to 8, which contains one or more of the following additives: plasticizer, crosslinking auxiliary material, molecular sieve, stabilizer, auxiliary material, dye and filler.

10. Use of a thermoplastic elastomer composition for producing a composite material with rubber based on crosslinked diene rubber mixtures, wherein the thermoplastic elastomer composition comprises a styrene block copolymer (SBC) with a mean number-average molecular weight *M*ₙ of more than 70,000 g/mol, a double-bond-containing polymer with a molar proportion of double bonds in the range of from 5 to 95 mol-%, relative to the monomer units of the polymer, and a non-elastomeric polyolefin.

11. Article, which comprises a thermoplastic elastomer composition and a rubber based on crosslinked diene rubber mixtures, preferably EPDM, wherein the thermoplastic elastomer composition comprises a styrene block copolymer (SBC) with a mean number-average molecular weight *M*ₙ of more than 70,000 g/mol, a double-bond-containing polymer with a molar proportion of double bonds in the range of from 5 to 95 mol-%, relative to the monomer units of the polymer, and a non-elastomeric polyolefin.

12. Process for producing a thermoplastic elastomer composition, wherein a styrene block copolymer (SBC) with a mean number-average molecular weight *M*ₙ of more than 70,000 g/mol, a double-bond-containing polymer with a molar proportion of double bonds in the range of from 5 to 95 mol-%, relative to the number of moles of all monomer units of the polymer used for the polymerization, and a non-elastomeric polyolefin are mixed with each other, wherein the proportion by weight of SBC lies in the range of from 15 to 40 wt.-%, relative to the total weight of the composition, and wherein the weight ratio of SBC to double-bond-containing polymer lies in the range of from 10:1 to 4:1.

13. Process according to claim 12, wherein the mixing is effected at a temperature above the melting and/or softening point of the non-elastomeric polyolefin.

14. Thermoplastic elastomer composition, which is obtainable using a method according to claim 13.

## Revendications

1. Composition d'élastomère thermoplastique comprenant un copolymère à blocs de styrène (SBC) comportant un poids moléculaire moyen en nombre *M*ₙ supérieur à 70 000 g/mol, un polymère contenant des liaisons doubles comportant une proportion molaire de liaisons doubles dans la plage de 5 à 95 % en moles, sur la base des unités monomères du polymère, et une polyoléfine non élastomère, la proportion pondérale du SBC se trouvant dans la plage de 15 à 40 % en poids, sur la base du poids total de la composition, et le rapport pondéral du SBC au polymère contenant des liaisons doubles se trouvant dans la plage de 10:1 à 4:1.

2. Composition selon la revendication 1, le SBC étant un SBC exempt de liaisons doubles.

3. Composition selon la revendication 1 ou 2, le SBC étant un copolymère tribloc linéaire.

4. Composition selon l'une des revendications 1 à 3, le SBC présentant un bloc polyoléfine, de préférence un bloc éthylène/propylène ou éthylène/butylène.

5. Composition selon l'une des revendications 1 à 4, le polymère contenant des liaisons doubles étant un copolymère à blocs de styrène non hydrogéné ou un caoutchouc de diène non réticulé et réticulable au soufre, de préférence un copolymère à blocs de styrène-isoprène-styrène, un EPDM non réticulé ou un caoutchouc isoprène.

6. Composition selon la revendication 5, le polymère contenant des liaisons doubles étant un copolymère à blocs de styrène non hydrogéné et présentant une proportion molaire de liaisons doubles dans la plage de 50 à 90 % en moles, ou le polymère contenant des liaisons doubles étant un caoutchouc de diène non réticulé et réticulable au soufre et présentant une proportion molaire de liaisons doubles dans la plage de 5 à 40 % en moles, respectivement sur la base des unités monomères du polymère.

7. Composition selon l'une des revendications 1 à 6, qui présente une résine phénolique.

8. Composition selon la revendication 7, la résine phénolique étant une résine phénolique à base d'octylphénol.

9. Composition selon l'une des revendications 1 à 8, qui contient un ou plusieurs des additifs suivants : plastifiant, auxiliaire de réticulation, tamis moléculaire, stabilisant, auxiliaire, colorant et charge.

10. Utilisation d'une composition d'élastomère thermoplastique destinée à la production d'un matériau composite comportant une gomme de caoutchouc à base de mélanges de caoutchoucs de diènes réticulés, la composition d'élastomère thermoplastique comprenant un copolymère à blocs de styrène (SBC) comportant un poids moléculaire moyen en nombre *M*ₙ supérieur à 70 000 g/mol, un polymère contenant des liaisons doubles comportant une proportion molaire de liaisons doubles dans la plage de 5 à 95 % en moles, sur la base des unités monomères du polymère, et une polyoléfine non élastomère.

11. Article comprenant une composition d'élastomère thermoplastique et une gomme de caoutchouc à base de mélanges de caoutchoucs de diènes réticulés, de préférence d'EPDM, la composition d'élastomère thermoplastique comprenant un copolymère à blocs de styrène (SBC) comportant un poids moléculaire moyen en nombre *M*ₙ supérieur à 70 000 g/mol, un polymère contenant des liaisons doubles comportant une proportion molaire de liaisons doubles dans la plage de 5 à 95 % en moles, sur la base des unités monomères du polymère, et une polyoléfine non élastomère.

12. Procédé de production d'une composition d'élastomère thermoplastique, un copolymère à blocs de styrène (SBC) comportant un poids moléculaire moyen en nombre *M*ₙ supérieur à 70 000 g/mol, un polymère contenant des liaisons doubles comportant une proportion molaire de liaisons doubles dans la plage de 5 à 95 % en moles, sur la base du nombre de moles de toutes les unités monomères du polymère utilisées pour la polymérisation, et une polyoléfine non élastomère étant mélangés ensemble, la proportion pondérale du SBC se trouvant dans la plage de 15 à 40 % en poids, par rapport au poids total de la composition, et le rapport pondéral du SBC au polymère contenant des liaisons doubles se trouvant entre 10:1 et 4:1.

13. Procédé selon la revendication 12, le mélange s'effectuant à une température supérieure au point de fusion et/ou de ramollissement de la polyoléfine non élastomère.

14. Composition d'élastomère thermoplastique pouvant être obtenue selon un procédé selon la revendication 13.
